# EUROPEAN PATENT SPECIFICATION

(11) **EP 3 330 423 B1**
(45) Date of publication and mention of the grant of the patent: **08.09.2021**
(21) Application number: 16832260.0
(22) Date of filing: 28.07.2016
(51) Int. Cl.: D06F 33/48, D06F 37/42, D06F 103/04, D06F 105/46, D06F 103/46, D06F 105/48

(54) **DRUM WASHING MACHINE, AND CONTROL METHOD AND APPARATUS FOR SAME**
TROMMELWASCHMASCHINE UND STEUERUNGSVERFAHREN SOWIE VORRICHTUNG DAFÜR
MACHINE À LAVER À TAMBOUR, APPAREIL ET PROCÉDÉ DE COMMANDE POUR CELLE-CI

(30) Priority: 31.07.2015 CN 201510469425
(43) Date of publication of application: 06.06.2018
(73) Proprietor: Guangdong Welling Motor Manufacturing Co., Ltd., Foshan, Guangdong 528311 (CN)
(72) Inventor: XU, Lei, Foshan Guangdong 528311 (CN); GONG, Liming, Foshan Guangdong 528311 (CN); QIN, Xiangnan, Foshan Guangdong 528311 (CN)
(74) Representative: Lam, Alvin
(86) International application number: PCT/CN2016/092107
(87) International publication number: WO 2017/020772

(56) References cited:
- EP-A1- 2 415 919
- EP-A1- 2 692 936
- WO-A1-2014/186992
- CN-A- 102 086 581
- CN-A- 103 225 195
- CN-A- 103 225 195
- CN-A- 103 925 979
- CN-A- 103 966 799
- CN-A- 104 593 996
- JP-A- 2008 253 619
- KR-A- 20050 015 690
- KR-A- 20080 102 611
- US-A1- 2014 090 181
- US-A1- 2015 134 125

## Description

### FIELD

The present disclosure relates to a field of washing machine detection and control technology, and more particularly to a drum washing machine, and a control method and a control apparatus for the same.

### BACKGROUND

For a drum washing machine, when a load of a variable-frequency electric motor is not balanced, the higher a rotation velocity of the variable-frequency electric motor is, the greater vibration and noise of a system will be, thus reducing the service life of the machine. This situation is particularly prominent on the drum washing machine. The variable-frequency electric motor has a load imbalance detection function, and if any load imbalance is detected, the vibration and noise of the system can be reduced by adjusting the rotation velocity of the electric motor or changing the state of load imbalance.

The load imbalance detection in theory is related to two variables of rotation velocity fluctuation and load inertia. Inertia identification requires acceleration and deceleration processes to get a relatively accurate inertia value, but the acceleration process may result in collision with the drum or displacement of the drum due to an excessive eccentric load, which is not allowed in the washing machine application. Therefore, a magnitude of the rotation velocity fluctuation is usually used for eccentric protection before the inertia identification, so as to ensure safety of the inertia identification process. However, during experiments, it has been found that the collision with the drum still occurs in a weighing process, so a pre-weighing process with a low accuracy requirement is performed here before computation of the rotation velocity fluctuation. With different pre-weighing values, a weighing protection threshold is also set correspondingly to be different, so as to ensure safety of the weighing process.

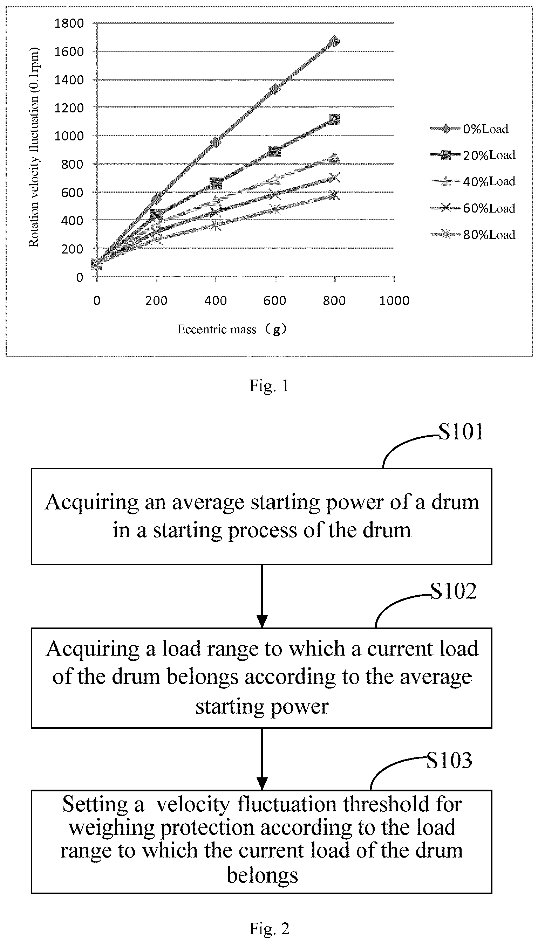

The following is a theoretical analysis about whether any problem will occur when the rotation velocity fluctuation is used for the weighing protection. As illustrated in Fig. 1, presented is a corresponding relationship between an eccentric mass and the rotation velocity fluctuation for an 8kg-capacity washing machine.

As seen from Fig. 1, the velocity fluctuation corresponding to the same eccentric mass will be decreased as the load increases. There are two limiting conditions for setting the weighing protection threshold, the first condition is that the threshold cannot be too big to cause the collision with the drum, and the second condition is that the threshold cannot be too small to result in failure of dehydration in a case of only one piece of clothes, especially for a load of a single bath towel or a pair of jeans. Based on these two limiting conditions, a conventional weighing protection solution chooses a working point of 0% load and 800g eccentric mass, that is, a velocity fluctuation threshold is set to be about 170rpm. As a result, an eccentric mass corresponding to this threshold under an 80% load is computed to have a value of 4.2kg, and for this eccentric mass, the collision with the drum will definitely occur in the weighing process. From the above analysis, we can see that the conventional weighing protection solution in theory has inherent defects and fails to play a protection role in the case of heavy loads.

In conclusion, the control method for the drum washing machine in the prior art has the problems of collision with the drum in the weighing process and failure of dehydration for one piece of clothes.

US2015/134125 discusses a method for predicting and preventing a cabinet strike event in a washing machine appliance. CN103225195 discusses a weighing method for a washing machine.

### TECHNICAL PROBLEM

An objective of the present disclosure is to provide a drum washing machine, and a control method and a control apparatus for the same, aiming to solve problems existing in a control method for a washing machine in the prior art, i.e. collision with a drum in a weighing process and failure of dehydration for one piece of clothes.

### TECHNICAL SOLUTION

The present disclosure is achieved by a control method for a drum washing machine. According to one aspect, the present invention provides a control method as set out in claim 1.

According to another aspect, the present disclosure further provides a control apparatus for a washing machine, as set out in claim 9. The present disclosure further provides a washing machine, including a drum and the above control apparatus for the washing machine, as set out in claim 10.

### BENEFICIAL EFFECT

With the drum washing machine as well as the control method and apparatus for the drum washing machine, a value of the current load is obtained by using the corresponding relationship between the loads with different weights and the average starting powers, and the velocity fluctuation threshold for weighing protection is set according to the value of the current load, so as to avoid the phenomena of collision with the drum and failure of dehydration in the case of only one piece of clothes. This solution completes computation in a starting stage, and can be implemented by only a few modifications on the basis of the conventional solution without the need to add extra control logic, thereby being convenient and practical, and lowering an upgrade cost of a whole product.

### BRIEF DESCRIPTION OF THE DRAWINGS

Fig. 1 shows a relationship between an eccentric mass and a rotation velocity fluctuation of a drum under different loads in a drum washing machine provided in the prior art;
Fig. 2 is a flow chart for implementing a control method for a drum washing machine according to an embodiment of the present disclosure;
Fig. 3 is another flow chart for implementing a control method for a drum washing machine according to an embodiment of the present disclosure;
Fig. 4 is a schematic view of a control apparatus for a drum washing machine according to an embodiment of the present disclosure.

### DETAILED DESCRIPTION

In order to make the objectives, technical solutions and advantages of the present disclosure clearer and more comprehensible, the present disclosure will be further described in detail below with reference to the accompanying drawings and embodiments. It should be understood that the specific embodiments described herein are only used to explain the present disclosure and are not intended to limit the present disclosure.

Fig. 2 shows a flow chart for implementing a control method for a drum washing machine according to an embodiment of the present disclosure. For convenience of illustration, only a part related to the embodiment of the present disclosure is shown, and details are as follows. The control method includes the following steps.

In step S101, an average starting power of a drum is acquired in a starting process of the drum.

Specifically, the acquisition of the average starting power of the drum in step S101 is realized by acquiring a starting power of the drum and integrating the starting power for a duration of start-up of the drum.

In step S102, a load range to which a current load of the drum belongs is acquired according to the average starting power.

Before step S102, the method further includes pre-storing a corresponding relationship between a threshold for the average starting power and the load range.

As indicated by Table 1, a result of a test on the starting power of an 8kg-capacity washing machine is shown as follows.

**Table 1: Corresponding relationship between load and average starting power**

| Load | 0% | 20% | 40% | 60% | 80% |
|---|---|---|---|---|---|
| Average starting power (W) | 18 | 63 | 90 | 111 | 125 |

Based on the average starting power, it is possible to identify the respective current loads of the drum are 0%, 20%, 40%, 60% and 80%.

According to the above corresponding relationship between the load and the average starting power, the load range is obtained by setting the threshold for the average starting power.

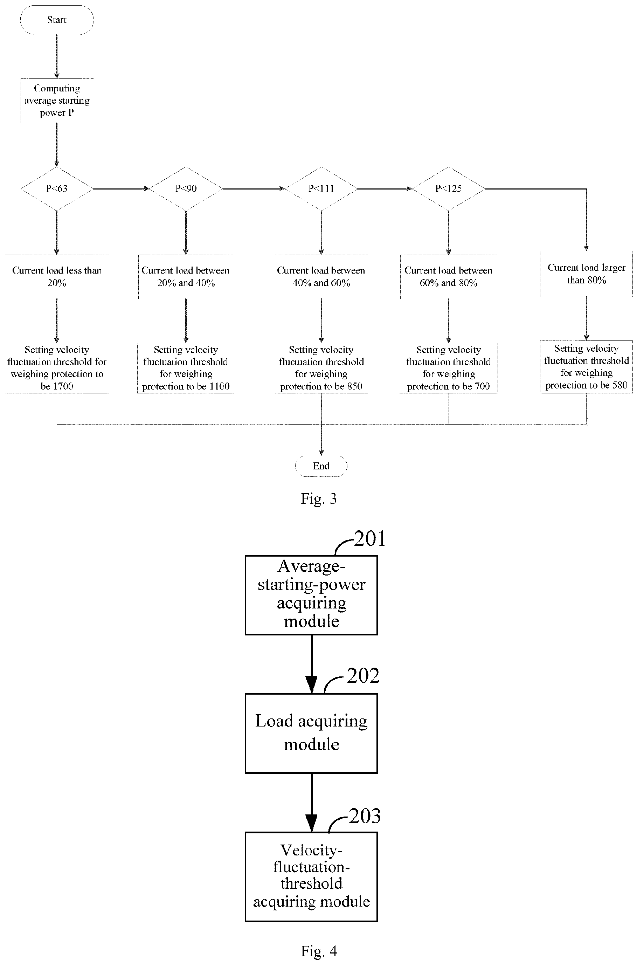

As illustrated in Fig. 3, step S102 is specifically realized by judging whether the average starting power is smaller than a first threshold for the average starting power; if yes, determining that the current load of the drum belongs to a first load range; if no, judging whether the average starting power is smaller than a second threshold for the average starting power; if yes, determining that the current load of the drum belongs to a second load range; if no, judging whether the average starting power is smaller than a third threshold for the average starting power; if yes, determining that the current load of the drum belongs to a third load range; if no, judging whether the average starting power is smaller than a fourth threshold for the average starting power; if yes, determining that the current load of the drum belongs to a fourth load range; if no, determining that the current load of the drum belongs to a fifth load range.

The first threshold for the average starting power is set to be 63W, and the first load range is that the current load is less than 20% of the drum load; the second threshold for the average starting power is set to be 90W, and the second load range is that the current load is between 20% and 40% of the drum load; the third threshold for the average starting power is set to be 111W, and the third load range is that the current load is between 40% and 60% of the drum load; the fourth threshold for the average starting power is set to be 125W, and the fourth load range is that the current load is between 60% and 80% of the drum load; the fifth load range is that the current load is greater than 80% of the drum load.

In step S103, a velocity fluctuation threshold for weighing protection is set according to the load range to which the current load of the drum belongs.

Before step S103, the method further includes pre-storing a corresponding relationship between the load range and the velocity fluctuation threshold for weighing protection.

Still by example of the 8kg-capacity washing machine, a maximum dehydration eccentric mass is allowed to be 800g, and if the eccentric mass exceeds 800g, dehydration noise will be large and a high-speed dehydration displacement will be caused. Meanwhile, a maximum eccentric mass allowed in a weighing process is 1400g, and if the eccentric mass exceeds 1400g, collision with the drum will occur in the weighing process. In order to guarantee dehydration, in the case of the eccentric mass being less than 800g, the weighing process should be entered, while in the case of the eccentric mass being greater than 1400g, the weighing process is not allowed to be entered. Therefore, an eccentric mass threshold for weighing protection should be ensured to be between 800g and 1400g under each load condition herein.

Table 2 shows velocity fluctuation data tested under different loads. From the table, we can see that a maximum dehydration eccentric velocity fluctuation in a condition of 0% load is 1700, and a maximum weighing safety eccentric velocity fluctuation in a condition of less than 20% load is 1800. Thus, when the load is between 0% and 20%, the velocity fluctuation threshold for weighing protection can be selected as 1700, such that it is possible to ensure that the weighing process can be entered when the eccentric mass is less than 800g, and the load weighing process cannot be entered under the load above 1400g. The situations under other load conditions are similar.

**Table 2: Velocity fluctuation data obtained by testing different loads**

| Load | Maximum dehydration eccentric mass (g) | Maximum dehydration eccentric velocity fluctuation (0.1rpm) | Maximum weighing safety eccentric mass (g) | Maximum weighing safety eccentric velocity fluctuation (0.1rpm) |
|---|---|---|---|---|
| 0% | 800 | 1700 | 1400 | 3300 |
| 20% | 800 | 1100 | 1400 | 1800 |
| 40% | 800 | 850 | 1400 | 1200 |
| 60% | 800 | 700 | 1400 | 900 |
| 80% | 800 | 580 | 1400 | 750 |

Therefore, according to the corresponding relationship between the load and the maximum dehydration eccentric velocity fluctuation, when the current load of the drum is in the first load range, the velocity fluctuation threshold for weighing protection is set to be 1700rpm; when the current load of the drum is in the second load range, the velocity fluctuation threshold for weighing protection is set to be 1100rpm; when the current load of the drum is in the third load range, the velocity fluctuation threshold for weighing protection is set to be 850rpm; when the current load of the drum is in the fourth load range, the velocity fluctuation threshold for weighing protection is set to be 700rpm; when the current load of the drum is in the fifth load range, the velocity fluctuation threshold for weighing protection is set to be 580rpm.

With the control method for the drum washing machine according to the present disclosure, a value of the current load is obtained by using the corresponding relationship between the loads of different weights and the average starting powers, and the velocity fluctuation threshold for weighing protection is set according to the value of the current load, so as to avoid the phenomena of collision with the drum and failure of dehydration in the case of only one piece of clothes. This solution completes computation in a starting stage, and can be implemented by only a few modifications on the basis of the conventional solution without the need to add extra control logic, thereby being convenient and practical, and lowering an upgrade cost of the whole product.

Another embodiment of the present disclosure provides a control apparatus for a drum washing machine. As shown in Fig. 4, the control apparatus for the drum washing machine includes: an average-starting-power acquiring module 201 configured to acquire an average starting power of a drum in a starting process of the drum; a load acquiring module 202 configured to acquire a load range to which a current load of the drum belongs according to the average starting power; and a velocity-fluctuation-threshold acquiring module 203 configured to set a velocity fluctuation threshold for weighing protection according to the load range to which the current load of the drum belongs.

The average-starting-power acquiring module acquires the average starting power of the drum by acquiring a starting power of the drum and integrating the starting power for the duration of start-up of the drum.

The control apparatus for the drum washing machine includes a storing module configured to pre-store a corresponding relationship between a threshold for the average starting power and the load range, and pre-store a corresponding relationship between the load range and a velocity fluctuation threshold for weighing protection.

The load acquiring module acquires the load range to which the current load of the drum belongs, according to the average starting power, through following actions: judging whether the average starting power is smaller than a first threshold for the average starting power; if yes, determining that the current load of the drum belongs to a first load range; if no, judging whether the average starting power is smaller than a second threshold for the average starting power; if yes, determining that the current load of the drum belongs to a second load range; if no, judging whether the average starting power is smaller than a third threshold for the average starting power; if yes, determining that the current load of the drum belongs to a third load range; if no, judging whether the average starting power is smaller than a fourth threshold for the average starting power; if yes, determining that the current load of the drum belongs to a fourth load range; if no, determining that the current load of the drum belongs to a fifth load range.

The first threshold for the average starting power is set to be 63W, and the first load range is that the current load is less than 20% of the drum load; the second threshold for the average starting power is set to be 90W, and the second load range is that the current load is between 20% and 40% of the drum load; the third threshold for the average starting power is set to be 111W, and the third load range is that the current load is between 40% and 60% of the drum load; the fourth threshold for the average starting power is set to be 125W, and the fourth load range is that the current load is between 60% and 80% of the drum load; the fifth load range is that the current load is greater than 80% of the drum load.

When the current load of the drum is in the first load range, the velocity fluctuation threshold for weighing protection is set to be 1700rpm; when the current load of the drum is in the second load range, the velocity fluctuation threshold for weighing protection is set to be 1100rpm; when the current load of the drum is in the third load range, the velocity fluctuation threshold for weighing protection is set to be 850rpm; when the current load of the drum is in the fourth load range, the velocity fluctuation threshold for weighing protection is set to be 700rpm; when the current load of the drum is in the fifth load range, the velocity fluctuation threshold for weighing protection is set to be 580rpm.

The present disclosure further provides another preferable embodiment of the control apparatus for the drum washing machine. In this embodiment, the control apparatus includes a processor configured to execute program modules stored in a memory. The program modules includes: an average-starting-power acquiring module 201 configured to acquire an average starting power of a drum in a starting process of the drum; a load acquiring module 202 configured to acquire a load range to which a current load of the drum belongs according to the average starting power; and a velocity-fluctuation-threshold acquiring module 203 configured to set a velocity fluctuation threshold for weighing protection according to the load range to which the current load of the drum belongs.

Specifically, the control apparatus for the drum washing machine incudes the processor, a communication interface, the memory and a bus.

The processor, the communication interface and the memory achieve mutual communication by means of the bus.

The communication interface is configured to communicate with a network element, such as a virtual machine management center, a shared memory or the like.

The processor is configured to execute a program.

Specifically, the program may include a program code that contains a computer operation instruction.

The processor may be a central processing unit (CPU), or an application specific integrated circuit (ASIC), or one or more integrated circuits configured to implement the embodiment of the present disclosure.

The memory is configured to store the program. The memory may include a high-speed random access memory (RAM), and may also include a non-volatile memory, for example at least one magnetic disk memory. The program may specifically include: the average-starting-power acquiring module 201 configured to acquire the average starting power of the drum in the starting process of the drum; the load acquiring module 202 configured to acquire the load range to which the current load of the drum belongs according to the average starting power; and the velocity-fluctuation-threshold acquiring module 203 configured to set the velocity fluctuation threshold for weighing protection according to the load range to which the current load of the drum belongs.

For the specific implementation of each unit in the program, reference can be made to the corresponding units in the embodiment shown in Fig. 4, which will not be elaborated herein.

Those skilled in the art can clearly understand that, for convenience and simplicity of description, regarding specific working processes of the foregoing system, apparatus and module, reference can be made to corresponding processes in the foregoing method embodiment, which will not be elaborated herein.

In the several embodiments provided in the present application, it should be understood that the disclosed system, apparatus and method may be implemented in other manners. For example, the apparatus embodiment described above is merely exemplary. For example, the division of units is a merely logical function division and may include another division in actual implementations. For example, multiple units or components may be combined or integrated into another system, or some features may be ignored or not executed. In addition, the shown or discussed mutual coupling or direct coupling or communication connection may be indirect coupling or communication connection through some communication interfaces, devices or units, and may be electrical, mechanical or in other forms.

The units described as separate components may be or may not be physically separate. The component presented as the unit may be or may not be a physical unit, i.e. may be located at a position or may be distributed at many network elements. It is possible to select part of or all of the units to realize the objective of the present disclosure.

In addition, various functional units in various embodiments of the present disclosure may be integrated in one processing unit, or the various units may exist alone physically, or two or more units may be integrated in one unit.

When the function is realized in a form of a software function unit and is sold or used as a standalone product, it may be stored in a computer readable storage medium. Based on this understanding, the technical solution of the present disclosure essentially, or the part thereof contributing to the prior art, or the part of the technical solution can be embodied in a form of a software product. The computer software product is stored in a storage medium and includes several instructions for enabling a computer device (which may be a personal computer, a server, or a network device) to execute all or part of the steps of the method according to various embodiments of the present disclosure. The foregoing storage medium includes various media capable of storing a program code, such as a USB flash disk, a removable hard disk, a read-only memory (ROM), a random access memory (RAM), a magnetic disk, or an optical disk.

Yet another embodiment of the present disclosure provides a drum washing machine, including a drum and the above control apparatus for the drum washing machine.

With the drum washing machine as well as the control method and apparatus for the drum washing machine, a value of the current load is obtained by using the corresponding relationship between the loads of different weights and the average starting powers, and the velocity fluctuation threshold for weighing protection is set according to the value of the current load, so as to avoid the phenomena of collision with the drum and failure of dehydration in the case of only one piece of clothes. This solution completes computation in the starting stage, and can be implemented by only a few modifications on the basis of the conventional solution without the need to add extra control logic, thereby being convenient and practical, and lowering an upgrade cost of the whole product.

The foregoing descriptions are merely preferred embodiments of the present disclosure, and are not intended to limit the present disclosure. Any modifications, equivalent alternatives and improvements should be included in the protection scope of the present disclosure.

## Claims

1. A control method for a drum washing machine, in a load imbalance detection function having a pre-weighing process followed by a weighing process, wherein a velocity fluctuation threshold is set as a weighing protection threshold to control whether or not the weighing process is entered, the method **characterised by**:
step A, acquiring (S101) an average starting power of a drum in a starting process of the drum;
step B, determining (S102) a load range to which a current load of the drum belongs according to the average starting power;
step C, setting (S103) the velocity fluctuation threshold according to the determined load range.

2. The control method for the drum washing machine according to claim 1, wherein acquiring the average starting power of the drum in step A includes acquiring a starting power of the drum and integrating the starting power for a duration of start-up of the drum.

3. The control method for the drum washing machine according to claim 1, before step A, further comprising: pre-storing a corresponding relationship between a threshold for the average starting power and the load range.

4. The control method for the drum washing machine according to claim 3, wherein step B comprises:
judging whether the average starting power is smaller than a first threshold for the average starting power; if yes, determining that the current load of the drum belongs to a first load range; if no, judging whether the average starting power is smaller than a second threshold for the average starting power; if yes, determining that the current load of the drum belongs to a second load range; if no, judging whether the average starting power is smaller than a third threshold for the average starting power; if yes, determining that the current load of the drum belongs to a third load range; if no, judging whether the average starting power is smaller than a fourth threshold for the average starting power; if yes, determining that the current load of the drum belongs to a fourth load range; if no, determining that the current load of the drum belongs to a fifth load range.

5. The control method for the drum washing machine according to claim 1, before step A, further comprising: pre-storing a corresponding relationship between the load range and the velocity fluctuation threshold.

6. The control method for the drum washing machine according to claim 5, wherein the velocity fluctuation threshold is set as a value that is smaller than a maximum weighing safety eccentric velocity fluctuation corresponding to a maximum load in the load range.

7. The control method for the drum washing machine according to claim 6, wherein the velocity fluctuation threshold is set as a maximum dehydration eccentric velocity fluctuation.

8. The control method for the drum washing machine according to any preceding claim, further comprising determining that an eccentric mass is not greater than a maximum allowed eccentric mass.

9. A control apparatus for a drum washing machine, comprising an average-starting-power acquiring module, a load acquiring module and a velocity-fluctuation-threshold acquiring module configured to carry out the method of any one of claims 1 to 8.

10. A drum washing machine, comprising a drum, wherein the drum washing machine comprises a control apparatus according to claim 9.

## Patentansprüche

1. Steuerverfahren für eine Trommelwaschmaschine in einer Ladungsunwucht-Erkennungsfunktion mit einem Vorwiegeprozess, dem ein Wiegeprozess folgt, wobei ein Geschwindigkeitsschwankungs-Grenzwert als ein Wiegeschutz-Grenzwert eingestellt ist, um zu steuern, ob der Wiegeprozess gestartet wird oder nicht, wobei das Verfahren durch Folgendes gekennzeichnet ist:
Schritt A, Erfassen (S101) einer durchschnittlichen Anlaufleistung einer Trommel in einem Anlaufprozess der Trommel,
Schritt B, Bestimmen (S102) eines Ladungsbereichs, zu dem eine aktuelle Ladung der Trommel gehört, gemäß der durchschnittlichen Anlaufleistung,
Schritt C, Einstellen (S103) des Geschwindigkeitsschwankungs-Grenzwertes gemäß dem bestimmten Ladungsbereich.

2. Steuerverfahren für die Trommelwaschmaschine nach Anspruch 1, wobei das Erfassen der durchschnittlichen Anlaufleistung der Trommel in Schritt A das Erfassen einer Anlaufleistung der Trommel und das Integrieren der Anlaufleistung für eine Dauer einer Ingangsetzung der Trommel beinhaltet.

3. Steuerverfahren für die Trommelwaschmaschine nach Anspruch 1, vor Schritt A ferner Folgendes umfassend: Vorabspeichern einer entsprechenden Beziehung zwischen einem Grenzwert für die durchschnittliche Anlaufleistung und dem Ladungsbereich.

4. Steuerverfahren für die Trommelwaschmaschine nach Anspruch 3, wobei Schritt B Folgendes umfasst:
Bewerten, ob die durchschnittliche Anlaufleistung kleiner als ein erster Grenzwert für die durchschnittliche Anlaufleistung ist, wenn ja, Bestimmen, dass die aktuelle Ladung der Trommel zu einem ersten Ladungsbereich gehört, wenn nicht, Bewerten, ob die durchschnittliche Anlaufleistung kleiner als ein zweiter Grenzwert für die durchschnittliche Anlaufleistung ist, wenn ja, Bestimmen, dass die aktuelle Ladung der Trommel zu einem zweiten Ladungsbereich gehört, wenn nicht, Bewerten, ob die durchschnittliche Anlaufleistung kleiner als ein dritter Grenzwert für die durchschnittliche Anlaufleistung ist, wenn ja, Bestimmen, dass die aktuelle Ladung der Trommel zu einem dritten Ladungsbereich gehört, wenn nicht, Bewerten, ob die durchschnittliche Anlaufleistung kleiner als ein vierter Grenzwert für die durchschnittliche Anlaufleistung ist, wenn ja, Bestimmen, dass die aktuelle Ladung der Trommel zu einem vierten Ladungsbereich gehört, wenn nicht, Bestimmen, dass die aktuelle Ladung zu einem fünften Ladungsbereich gehört.

5. Steuerverfahren für die Trommelwaschmaschine nach Anspruch 1, vor Schritt A ferner Folgendes umfassend: Vorabspeichern einer entsprechenden Beziehung zwischen dem Ladungsbereich und dem Geschwindigkeitsschwankungs-Grenzwert.

6. Steuerverfahren für die Trommelwaschmaschine nach Anspruch 5, wobei der Geschwindigkeitsschwankungs-Grenzwert als ein Wert eingestellt wird, der kleiner als eine maximale exzentrische Geschwindigkeitsschwankung für die Wiegesicherheit ist, die einer maximalen Ladung in dem Ladungsbereich entspricht.

7. Steuerverfahren für die Trommelwaschmaschine nach Anspruch 6, wobei der Geschwindigkeitsschwankungs-Grenzwert als eine maximale exzentrische Geschwindigkeitsschwankung für die Entwässerung eingestellt ist.

8. Steuerverfahren für die Trommelwaschmaschine nach einem vorhergehenden Anspruch, ferner das Bestimmen umfassend, dass eine exzentrische Masse nicht größer als eine maximal zulässige exzentrische Masse ist.

9. Steuervorrichtung für eine Trommelwaschmaschine, ein Modul zum Erfassen der durchschnittlichen Anlaufleistung, ein Ladungserfassungsmodul und ein Modul zum Erfassen eines Geschwindigkeitsschwankungs-Grenzwertes umfassend, die dazu gestaltet sind, um das Verfahren nach einem der Ansprüche 1 bis 8 auszuführen.

10. Trommelwaschmaschine, eine Trommel umfassend, wobei die Trommelwaschmaschine eine Steuervorrichtung nach Anspruch 9 umfasst.

## Revendications

1. Procédé de commande pour une machine à laver à tambour, dans une fonction de détection de déséquilibre de charge ayant un processus de pré-pesage suivi d'un processus de pesage, dans lequel un seuil de fluctuation de vitesse est réglé comme étant un seuil de protection de pesage pour commander si oui ou non le processus de pesage est lancé, le procédé étant **caractérisé par** :
l'étape A consistant à acquérir (S101) une puissance de démarrage moyenne d'un tambour dans un processus de démarrage du tambour ;
l'étape B consistant à déterminer (S102) une plage de charge à laquelle appartient une charge en cours du tambour en fonction de la puissance de démarrage moyenne ;
l'étape C consistant à régler (S103) le seuil de fluctuation de vitesse en fonction de la plage de charge déterminée.

2. Procédé de commande pour la machine à laver à tambour selon la revendication 1, dans lequel l'étape consistant à acquérir la puissance de démarrage moyenne du tambour au cours de l'étape A comprend les étapes consistant à acquérir une puissance de démarrage du tambour et à intégrer la puissance de démarrage pendant une durée de démarrage du tambour.

3. Procédé de commande pour la machine à laver à tambour selon la revendication 1, avant l'étape A, comportant par ailleurs : l'étape consistant à pré-stocker une relation correspondante entre un seuil pour la puissance de démarrage moyenne et la plage de charge.

4. Procédé de commande pour la machine à laver à tambour selon la revendication 3, dans lequel l'étape B comporte les étapes consistant à :
évaluer si la puissance de démarrage moyenne est inférieure à un premier seuil pour la puissance de démarrage moyenne ; si oui, déterminer que la charge en cours du tambour appartient à une première plage de charge ; sinon, évaluer si la puissance de démarrage moyenne est inférieure à un deuxième seuil pour la puissance de démarrage moyenne ; si oui, déterminer que la charge en cours du tambour appartient à une deuxième plage de charge ; sinon, évaluer si la puissance de démarrage moyenne est inférieure à un troisième seuil pour la puissance de démarrage moyenne ; si oui, déterminer que la charge en cours du tambour appartient à une troisième plage de charge ; sinon, évaluer si la puissance de démarrage moyenne est inférieure à un quatrième seuil pour la puissance de démarrage moyenne ; si oui, déterminer que la charge en cours du tambour appartient à une quatrième plage de charge ; sinon, déterminer que la charge en cours du tambour appartient à une cinquième plage de charge.

5. Procédé de commande pour la machine à laver à tambour selon la revendication 1, avant l'étape A, comportant par ailleurs : l'étape consistant à pré-stocker une relation correspondante entre la plage de charge et le seuil de fluctuation de vitesse.

6. Procédé de commande pour la machine à laver à tambour selon la revendication 5, dans lequel le seuil de fluctuation de vitesse est réglé comme étant une valeur qui est inférieure à une fluctuation de vitesse excentrique de sécurité de pesage maximum correspondant à une charge maximum dans la plage de charge.

7. Procédé de commande pour la machine à laver à tambour selon la revendication 6, dans lequel le seuil de fluctuation de vitesse est réglé comme étant une fluctuation de vitesse excentrique de déshydratation maximum.

8. Procédé de commande pour la machine à laver à tambour selon l'une quelconque des revendications précédentes, comportant par ailleurs l'étape consistant à déterminer qu'une masse excentrique n'est pas supérieure à une masse excentrique admise maximum.

9. Appareil de commande pour une machine à laver à tambour, comportant un module d'acquisition de puissance de démarrage moyenne, un module d'acquisition de charge et un module d'acquisition de seuil de fluctuation de vitesse configurés pour effectuer le procédé selon l'une quelconque des revendications 1 à 8.

10. Machine à laver à tambour, comportant un tambour, dans laquelle la machine à laver à tambour comporte un appareil de commande selon la revendication 9.
